# EUROPEAN PATENT APPLICATION

(11) **EP 4 804 626 A1**
(43) Date of publication of application: **09.09.2026**
(21) Application number: 24886429.0
(22) Date of filing: 31.10.2024
(51) Int. Cl.: H04W 36/36, H04W 36/00

(54) **METHOD AND APPARATUS FOR SUPPORTING HANDOVER REQUEST IN WIRELESS COMMUNICATION SYSTEM**

(30) Priority: 31.10.2023 US 202363546531 P
(71) Applicant: LG Electronics Inc., Yeongdeungpo-gu Seoul 07336 (KR)
(72) Inventor: HAN, Jaemin, Seoul 06772 (KR); BYUN, Daewook, Seoul 06772 (KR); KIM, Seokjung, Seoul 06772 (KR)
(74) Representative: Frenkel, Matthias Alexander
(86) International application number: PCT/KR2024/096447
(87) International publication number: WO 2025/095760

(57) **Abstract**

The present disclosure is to support a handover request in a wireless communication system. A method of a target master node (MN) may comprise the steps of: receiving at least one first message related to a conditional handover request of a terminal from a source MN of the terminal; transmitting a second message related to an SN addition request to a first SN among candidate target SNs for the terminal; and receiving a third message related to the SN addition request from the first SN, wherein the second message includes at least one of a list of candidate target primary cells (PCells) determined for the first SN among candidate target PCells requested by the source MN for conditional handover, and information related to the number of candidate primary secondary cells (PSCells) allowed for configuration thereof, and the third message includes information related to candidate PSCell configuration prepared by the first SN on the basis of the second message.

## Description

### TECHNICAL FIELD

The following description relates to a wireless communication system, and more specifically, to a method and apparatus for supporting a conditional handover request in a wireless communication system.

### BACKGROUND ART

Wireless access systems are being widely deployed to provide various types of communication services such as voice and data. Generally, a wireless access system is a multiple access system that can support communication with multiple users by sharing available system resources (bandwidth, transmission power, etc.). Examples of multiple access systems include Code Division Multiple Access (CDMA) systems, Frequency Division Multiple Access (FDMA) systems, Time Division Multiple Access (TDMA) systems, Orthogonal Frequency Division Multiple Access (OFDMA) systems, Single Carrier Frequency Division Multiple Access (SC-FDMA) systems, and the like.

In particular, as many communication devices require large communication capacity, enhanced Mobile Broadband (eMBB) communication technology that is improved compared to existing Radio Access Technology (RAT) has been proposed. In addition, communication systems considering not only massive Machine Type Communications (mMTC) that connects multiple devices and objects to provide various services anytime and anywhere, but also reliability and latency sensitive services/User Equipment (UE) have been proposed. Various technical configurations for this purpose are being proposed.

### DISCLOSURE

### TECHNICAL PROBLEM

The present disclosure relates to an apparatus and method for efficiently supporting a handover request in a wireless communication system.

The present disclosure relates to an apparatus and method for supporting multiple conditional handover (CHO) requests in a wireless communication system.

The present disclosure relates to an apparatus and method for supporting multiple conditional handover (CHO) requests using a single conditional primary secondary cell (PSCell) addition (CPA) procedure in a wireless communication system.

The present disclosure relates to an apparatus and method for requesting conditional PSCell addition to at least one candidate target secondary node (SN) based on multiple CHO requests in a wireless communication system.

The present disclosure relates to an apparatus and method for providing at least one candidate target SN with a list of candidate target PCells determined for the candidate target SN in a wireless communication system.

The present disclosure relates to an apparatus and method for providing at least one candidate target SN with information related to an allowed number of candidate PSCell configurations in a wireless communication system.

The present disclosure relates to an apparatus and method for limiting the number of candidate PSCell configurations to be prepared by at least one candidate target SN in a wireless communication system.

The present disclosure relates to an apparatus and method for preparing at least one candidate PSCell configuration based on an allowed number of candidate PSCell configurations in a wireless communication system.

The present disclosure relates to an apparatus and method for transmitting at least one candidate PSCell configuration prepared based on an allowed number of candidate PSCell configurations in a wireless communication system.

The present disclosure relates to an apparatus and method for transmitting information indicating an association between at least one prepared candidate PSCell configuration and a candidate target PCell in a wireless communication system.

The technical objectives to be achieved by the present disclosure are not limited to the matters mentioned above, and other technical problems not mentioned may be considered by those skilled in the art to which the technical configuration of the present disclosure is applied from the embodiments of the present disclosure to be described below.

### TECHNICAL SOLUTION

As one example of the present disclosure, a method may comprise receiving, from a source master node (MN) of a terminal, at least one first message related to a conditional handover request of the terminal, transmitting, to a first SN among candidate target secondary nodes (SNs) for the terminal, a second message related to an SN addition request, and receiving, from the first SN, a third message related to the SN addition request. The second message may comprise at least one of a list of candidate target primary cells (PCells) determined for the first SN among candidate target PCells requested by the source MN for conditional handover, or information related to an allowed number of candidate primary secondary cell (PSCell) configurations. The third message may comprise information related to a candidate PSCell configuration prepared by the first SN based on the second message.

As one example of the present disclosure, a method may comprise receiving, from a target master node (MN) of a terminal, a second message related to an SN addition request, and transmitting, to the target MN, a third message related to the SN addition request. The second message may comprise at least one of a list of candidate target primary cells (PCells) determined for a first SN among candidate target PCells requested by a source MN for conditional handover, or information related to an allowed number of candidate primary secondary cell (PSCell) configurations. The third message may comprise information related to a candidate PSCell configuration prepared by the first SN based on the second message.

As one example of the present disclosure, an apparatus may comprise a transceiver and a processor coupled to the transceiver. The processor may control the transceiver to receive, from a source master node (MN) of a terminal, at least one first message related to a conditional handover request of the terminal, transmit, to a first SN among candidate target secondary nodes (SNs) for the terminal, a second message related to an SN addition request, and receive, from the first SN, a third message related to the SN addition request. The second message may comprise at least one of a list of candidate target primary cells (PCells) determined for the first SN among candidate target PCells requested by the source MN for conditional handover, or information related to an allowed number of candidate primary secondary cell (PSCell) configurations. The third message may comprise information related to a candidate PSCell configuration prepared by the first SN based on the second message.

As one example of the present disclosure, an apparatus may comprise a transceiver and a processor coupled to the transceiver. The processor may control the transceiver to receive, from a target master node (MN) of a terminal, a second message related to an SN addition request, and transmit, to the target MN, a third message related to the SN addition request. The second message may comprise at least one of a list of candidate target primary cells (PCells) determined for a first SN among candidate target PCells requested by a source MN for conditional handover, or information related to an allowed number of candidate primary secondary cell (PSCell) configurations. The third message may comprise information related to a candidate PSCell configuration prepared by the first SN based on the second message.

As one example of the present disclosure, a communication apparatus may comprise at least one processor and at least one memory coupled to the at least one processor and storing instructions that, when executed by the at least one processor, direct operations. The operations may comprise receiving, from a source master node (MN) of a terminal, at least one first message related to a conditional handover request of the terminal, transmitting, to a first SN among candidate target secondary nodes (SNs) for the terminal, a second message related to an SN addition request, and receiving, from the first SN, a third message related to the SN addition request. The second message may comprise at least one of a list of candidate target primary cells (PCells) determined for the first SN among candidate target PCells requested by the source MN for conditional handover, or information related to an allowed number of candidate primary secondary cell (PSCell) configurations. The third message may comprise information related to a candidate PSCell configuration prepared by the first SN based on the second message.

As one example of the present disclosure, a non-transitory computer-readable medium storing at least one instruction, when executed by at least one processor, may cause a communication apparatus to perform operations. The operations may comprise receiving, from a source master node (MN) of a terminal, at least one first message related to a conditional handover request of the terminal, transmitting, to a first SN among candidate target secondary nodes (SNs) for the terminal, a second message related to an SN addition request, and receiving, from the first SN, a third message related to the SN addition request. The second message may comprise at least one of a list of candidate target primary cells (PCells) determined for the first SN among candidate target PCells requested by the source MN for conditional handover, or information related to an allowed number of candidate primary secondary cell (PSCell) configurations. The third message may comprise information related to a candidate PSCell configuration prepared by the first SN based on the second message.

The above-described aspects of the present disclosure are only some of the preferred embodiments of the present disclosure, and various embodiments reflecting the technical features of the present disclosure can be derived and understood by those skilled in the art based on the detailed description of the present disclosure to be described below.

### ADVANTAGEOUS EFFECTS

The embodiments based on the present disclosure may provide the following effects.

The present disclosure can support multiple conditional handover requests in a wireless communication system.

The effects obtainable from the embodiments of the present disclosure are not limited to the effects mentioned above, and other effects not mentioned can be clearly derived and understood by those skilled in the art to which the technical configuration of the present disclosure is applied from the description of the embodiments of the present disclosure below. That is, unintended effects resulting from implementing the configuration described in the present disclosure may also be derived by those skilled in the art from the embodiments of the present disclosure.

### BRIEF DESCRIPTION OF THE DRAWINGS

The drawings attached below are provided to help understand the present disclosure, and may provide embodiments of the present disclosure together with detailed description. However, the technical features of the present disclosure are not limited to specific drawings, and the features disclosed in each drawing may be combined with each other to constitute a new embodiment. Reference numerals in each drawing may indicate structural elements.
FIG. 1 illustrates an example of a communication system applied to the present disclosure.
FIG. 2 illustrates an example of a UE applicable to the present disclosure.
FIG. 3 illustrates an example of functional separation between NG-RAN and 5th generation core (5GC) applicable to the present disclosure.
FIG. 4 illustrates an example of general architecture of a 5th generation (5G) system applicable to the present disclosure.
FIG. 5a and FIG. 5b illustrate a conditional handover procedure with a secondary node.
FIG. 6a and FIG. 6b illustrate an example of a procedure for supporting multiple conditional handover requests according to an embodiment of the present disclosure.
FIG. 7 illustrates an example of a procedure for receiving PSCell configuration information according to an embodiment of the present disclosure.
FIG. 8 illustrates an example of a procedure for transmitting PSCell configuration information according to an embodiment of the present disclosure.

### MODE FOR INVENTION

The following embodiments are combinations of components and features of the present disclosure in predetermined forms. Each component or feature may be considered optional unless explicitly stated otherwise. Each component or feature may be implemented without being combined with other components or features. Also, an embodiment of the present disclosure may be configured by combining some components and/or features. The order of operations described in the embodiments of the present disclosure may be changed. Some configurations or features of one embodiment may be included in another embodiment, or may be replaced with corresponding configurations or features of another embodiment.

In the description of the drawings, procedures or steps that may obscure the gist of the present disclosure are not described, and procedures or steps that can be understood at the level of those skilled in the art are also not described.

Throughout the specification, when a part is said to "comprise" or "include" a component, this means that it may further include other components rather than excluding other components unless specifically stated to the contrary. Also, terms such as "unit", "device", and "module" described in the specification mean a unit that processes at least one function or operation, which may be implemented by hardware, software, or a combination of hardware and software. Also, "a" or "an", "one", "the" and similar related words may be used in a sense including both singular and plural in the context of describing the present disclosure (particularly in the context of the claims below) unless otherwise indicated herein or clearly contradicted by context.

In this specification, the embodiments of the present disclosure have been described focusing on the data transmission and reception relationship between a base station and a mobile station. Here, the base station has meaning as a terminal node of a network that directly communicates with a mobile station. Specific operations described as being performed by a base station in this document may in some cases be performed by an upper node of the base station.

That is, various operations performed for communication with a mobile station in a network consisting of multiple network nodes including a base station may be performed by the base station or other network nodes other than the base station. At this time, 'base station' may be replaced by terms such as fixed station, Node B, eNB (eNode B), gNB (gNode B), ng-eNB, advanced base station (ABS), or access point.

Also, in the embodiments of the present disclosure, a terminal may be replaced by terms such as user equipment (UE), mobile station (MS), subscriber station (SS), mobile subscriber station (MSS), mobile terminal, or advanced mobile station (AMS).

Also, a transmitting end refers to a fixed and/or mobile node that provides data service or voice service, and a receiving end refers to a fixed and/or mobile node that receives data service or voice service. Therefore, in the case of uplink, a mobile station may be a transmitting end and a base station may be a receiving end. Similarly, in the case of downlink, a mobile station may be a receiving end and a base station may be a transmitting end.

The embodiments of the present disclosure may be supported by standard documents disclosed in at least one of wireless access systems including IEEE 802.xx system, 3rd Generation Partnership Project (3GPP) system, 3GPP Long Term Evolution (LTE) system, 3GPP 5th generation (5G) New Radio (NR) system, and 3GPP2 system, and in particular, the embodiments of the present disclosure may be supported by 3GPP technical specification (TS) 38.211, 3GPP TS 38.212, 3GPP TS 38.213, 3GPP TS 38.321, and 3GPP TS 38.331 documents.

Also, the embodiments of the present disclosure may be applied to other wireless access systems and are not limited to the above-described systems. For example, they may be applicable to systems applied after the 3GPP 5G NR system and are not limited to a specific system.

That is, obvious steps or parts not described among the embodiments of the present disclosure may be described with reference to the above documents. Also, all terms disclosed in this document may be described by the above standard documents.

Hereinafter, preferred embodiments according to the present disclosure will be described in detail with reference to the accompanying drawings. The detailed description to be disclosed below together with the accompanying drawings is intended to describe exemplary embodiments of the present disclosure and is not intended to represent the only embodiment in which the technical configuration of the present disclosure may be implemented.

Also, specific terms used in the embodiments of the present disclosure are provided to help understanding of the present disclosure, and the use of such specific terms may be changed to other forms without departing from the technical spirit of the present disclosure.

The following technology may be applied to various wireless access systems such as code division multiple access (CDMA), frequency division multiple access (FDMA), time division multiple access (TDMA), orthogonal frequency division multiple access (OFDMA), single carrier frequency division multiple access (SC-FDMA), and the like.

For clarity of description below, the description is based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology after TS Release 17 and/or Release 18. "xxx" means a standard document detail number. LTE/NR/6G may be collectively referred to as a 3GPP system.

Regarding background technology, terms, abbreviations, etc., used in the present disclosure, reference may be made to matters described in standard documents published before the present disclosure. For example, 36.xxx and 38.xxx standard documents may be referred to.

For terms, abbreviations, and other background technologies that may be used in this document, reference may be made to the following standard document descriptions published before this document. In particular, for LTE/ Evolved Packet System (EPS) related terms, abbreviations, and other background technologies, reference may be made to 36.xxx series, 23.xxx series, and 24.xxx series, and for new radio (NR)/5G system (5GS) related terms, abbreviations, and other background technologies, reference may be made to 38.xxx series, 23.xxx series, and 24.xxx series.

Hereinafter, this specification is described based on the terms defined as above.

The three main requirement areas of 5G include (1) Enhanced Mobile Broadband (eMBB) area, (2) massive Machine Type Communication (mMTC) area, and (3) Ultra-reliable and Low Latency Communications (URLLC) area.

Some use cases may require multiple areas for optimization, and other use cases may focus only on one Key Performance Indicator (KPI). 5G supports these various use cases in a flexible and reliable way.

### Communication System Applicable to the Present Disclosure

Although not limited thereto, various descriptions, functions, procedures, proposals, methods and/or operational flowcharts of the present disclosure disclosed in this document may be applied to various fields requiring wireless communication/connection (e.g., 5G) between devices.

Hereinafter, more specific examples are illustrated with reference to drawings. In the following drawings/descriptions, the same reference numerals may illustrate the same or corresponding hardware blocks, software blocks, or functional blocks unless described otherwise.

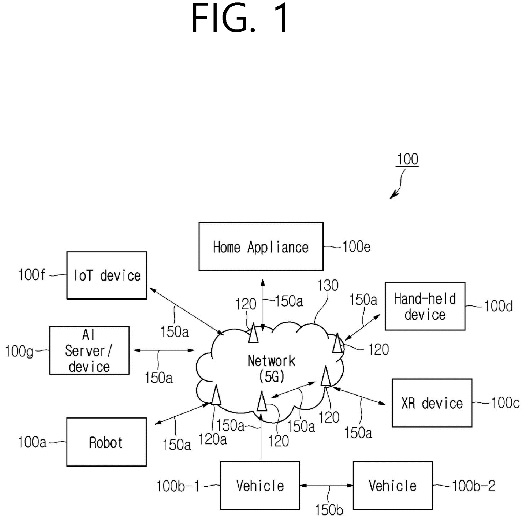

FIG. 1 illustrates an example of a communication system applied to the present disclosure.

Referring to FIG. 1, a communication system 100 applied to the present disclosure includes wireless devices, a base station, and a network. Here, a wireless device means a device that performs communication using wireless access technology (e.g., 5G NR, LTE), and may be referred to as a communication/wireless/5G device. Although not limited thereto, the wireless device may include a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 100g. For example, the vehicle may include a vehicle equipped with wireless communication function, an autonomous vehicle, a vehicle capable of performing vehicle-to-vehicle communication, etc. Here, the vehicles 100b-1 and 100b-2 may include an unmanned aerial vehicle (UAV) (e.g., drone). The XR device 100c includes augmented reality (AR)/virtual reality (VR)/mixed reality (MR) devices, and may be implemented in the form of a head-mounted device (HMD), a head-up display (HUD) installed in a vehicle, television, smartphone, computer, wearable device, home appliance, digital signage, vehicle, robot, etc. The hand-held device 100d may include a smartphone, smart pad, wearable device (e.g., smartwatch, smart glasses), computer (e.g., laptop, etc.), etc. The home appliance 100e may include TV, refrigerator, washing machine, etc. The IoT device 100f may include a sensor, smart meter, etc. For example, the base station 120 and network 130 may also be implemented as wireless devices, and a specific wireless device 120a may operate as a base station/network node for other wireless devices.

The wireless devices 100a to 100f may be connected to the network 130 through the base station 120. AI technology may be applied to the wireless devices 100a to 100f, and the wireless devices 100a to 100f may be connected to an AI server 100g through the network 130. The network 130 may be configured using a 3G network, 4G (e.g., LTE) network, or 5G (e.g., NR) network, etc. The wireless devices 100a to 100f may communicate with each other through the base station 120/network 130, but may also communicate directly (e.g., sidelink communication) without going through the base station 120/network 130. For example, the vehicles 100b-1 and 100b-2 may perform direct communication (e.g., vehicle to vehicle (V2V)/vehicle to everything (V2X) communication). Also, the IoT device 100f (e.g., sensor) may communicate directly with other IoT devices (e.g., sensor) or other wireless devices 100a to 100f.

Wireless communication/connection 150a, 150b, and 150c may be established between the wireless devices 100a to 100f/base station 120 and between base stations 120/120. Here, wireless communication/connection may be achieved through various wireless access technologies (e.g., 5G NR) such as uplink/downlink communication 150a, sidelink communication 150b (or D2D communication), and inter-base station communication 150c (e.g., relay, integrated access backhaul (IAB)). Through wireless communication/connection 150a, 150b, and 150c, wireless devices and base stations/wireless devices, and base stations and base stations may transmit/receive wireless signals to/from each other. For example, wireless communication/connection 150a, 150b, and 150c may transmit/receive signals through various physical channels. To this end, based on various proposals of the present disclosure, at least some of various configuration information setting processes for wireless signal transmission/reception, various signal processing processes (e.g., channel encoding/decoding, modulation/demodulation, resource mapping/demapping, etc.), resource allocation processes, etc., may be performed.

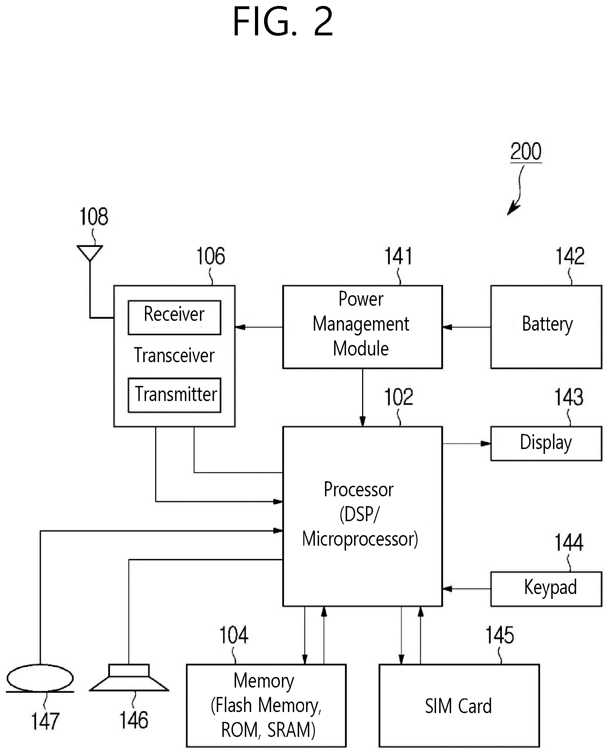

FIG. 2 illustrates an example of a UE applicable to the present disclosure.

Referring to FIG. 2, the UE 200 may include a processor 202, memory 204, transceiver 206, one or more antennas 208, power management module 241, battery 242, display 243, keypad 244, Subscriber Identification Module (SIM) card 245, speaker 246, and microphone 247.

The processor 202 may be configured to implement the descriptions, functions, procedures, proposals, methods and/or operational flowcharts disclosed herein. The processor 202 may be configured to control one or more other components of the UE 200 to implement the descriptions, functions, procedures, proposals, methods and/or operational flowcharts disclosed herein. Layers of wireless interface protocol may be implemented in the processor 202. The processor 202 may include ASIC, other chipset, logic circuit and/or data processing device. The processor 202 may be an application processor. The processor 202 may include at least one of DSP, Central Processing Unit (CPU), Graphics Processing Unit (GPU), and modem (modulator and demodulator).

The memory 204 is operably coupled with the processor 202 and may store various information for operating the processor 202. The memory 204 may include ROM, RAM, flash memory, memory card, storage medium and/or other storage device. When implementation is implemented in software, the techniques described herein may be implemented using modules (e.g., procedures, functions, etc.) that perform the descriptions, functions, procedures, proposals, methods and/or operational flowcharts disclosed herein. The modules may be stored in memory 204 and executed by the processor 202. The memory 204 may be implemented within the processor 202 or external to the processor 202, in which case it may be communicatively coupled with the processor 202 through various methods known in the art.

The transceiver 206 is operably coupled with the processor 202 and may transmit and/or receive wireless signals. The transceiver 206 may include a transmitter and a receiver. The transceiver 206 may include baseband circuitry for processing radio frequency signals. The transceiver 206 may control one or more antennas 208 to transmit and/or receive wireless signals.

The power management module 241 may manage power for the processor 202 and/or transceiver 206. The battery 242 may supply power to the power management module 241.

The display 243 may output results processed by the processor 202. The keypad 244 may receive input for use by the processor 202. The keypad 244 may be displayed on the display 243.

The SIM card 245 is an integrated circuit for securely storing International Mobile Subscriber Identity (IMSI) and related keys, and may be used to identify and authenticate subscribers in mobile phone devices such as mobile phones or computers. Also, contact information may be stored in many SIM cards.

The speaker 246 may output sound-related results processed by the processor 202. The microphone 247 may receive sound-related input for use by the processor 202.

In implementation of this specification, the UE may operate as a transmitting device in uplink and as a receiving device in downlink. In implementation of this specification, the base station may operate as a receiving device in UL and as a transmitting device in DL. In this specification, the base station may be called Node B, eNode B (eNB), gNB, and may not be limited to a specific form.

Also, for example, the UE may be implemented in various forms according to use cases/services. The UE may be configured by various components, devices/parts and/or modules. For example, each UE may include a communication device, control device, memory device, and additional components. The communication device may include communication circuitry and a transceiver. For example, the communication circuitry may include one or more processors and/or one or more memories. For example, the transceiver may include one or more transceivers and/or one or more antennas. The control device is electrically connected to the communication device, memory device, and additional components, and may control the overall operation of each UE. For example, the control device may control the electrical/mechanical operation of each UE based on programs/codes/instructions/information stored in the memory device. The control device may transmit information stored in the memory device to the outside (e.g., other communication devices) through the communication device via wireless/wired interface, or store information received from the outside (e.g., other communication devices) through the communication device via wireless/wired interface in the memory device.

The additional components may be configured variously according to the type of UE. For example, the additional components may include at least one of power device/battery, input/output (I/O) device (e.g., audio I/O port, video I/O port), driving device, and computing device. Also, the UE may be implemented in the form of, but not limited to, robot (100a in FIG. 1), vehicle (100b-1 and 100b-2 in FIG. 1), XR device (100c in FIG. 1), portable device (100d in FIG. 1), home appliance (100e in FIG. 1), IoT device (100f in FIG. 1), digital broadcasting terminal, hologram device, public safety device, MTC device, medical device, fintech device (or financial device), security device, climate/environment device, AI server/device (100g in FIG. 1), base station (120 in FIG. 1), network node. The UE may be used in mobile or fixed locations according to use cases/services.

All of the various components, devices/parts and/or modules of the UE may be connected to each other through wired interface, or at least some may be wirelessly connected through the communication device. Also, each component, device/part and/or module of the UE may further include one or more elements. For example, the control device may be configured by one or more processor sets. For example, the control device may be configured by a set of communication control processor, Application Processor (AP), Electronic Control Unit (ECU), graphics processing unit, and memory control processor. As another example, the memory device may be configured by RAM, Dynamic RAM (DRAM), ROM, flash memory, volatile memory, non-volatile memory and/or combinations thereof.

5G System Architecture Applicable to the Present Disclosure

The 5G system is an advanced technology from 4th generation LTE mobile communication technology that supports new Radio Access Technology (RAT), extended LTE (eLTE) as an extended technology of Long Term Evolution (LTE), non-3GPP (e.g., WLAN) access, etc., through evolution or clean-state structure of existing mobile communication network structure.

The 5G system is defined service-based, and interactions between Network Functions (NFs) within the architecture for the 5G system can be represented in two ways as follows:
- Reference point representation: Represents interactions between NF services within NFs described by point-to-point reference points (e.g., N11) between two NFs (e.g., AMF and SMF).
- Service-based representation: Network functions (e.g., AMF) within the Control Plane (CP) allow other authorized network functions to access their services. This representation also includes point-to-point reference points when necessary.

5G Core (5GC) may include various components, among which access and mobility management function (AMF), session management function (SMF), policy control function (PCF), user plane function (UPF), application function (AF), unified data management (UDM), and non-3GPP interworking function (N3IWF) are included.

The UE is connected to a data network through UPF via next generation radio access network (NG-RAN) including gNB. The UE may receive data service through untrusted non-3GPP access, such as wireless local area network (WLAN). To connect non-3GPP access to the core network, N3IWF may be deployed.

N3IWF performs the function of managing interworking between non-3GPP access and the 5G system. When the UE is connected to non-3GPP access (e.g., WiFi referred to as IEEE 802.11), the UE may be connected to the 5G system through N3IWF. N3IWF performs control signaling with AMF and is connected to UPF through N3 interface for data transmission.

AMF may manage access and mobility in the 5G system. AMF may perform the function of managing non-access stratum (NAS) security. AMF may perform the function of handling mobility in idle state.

UPF performs the function of a gateway for transmitting and receiving user data. The UPF node may perform all or part of the user plane functions of serving gateway (S-GW) and packet data network gateway (P-GW) of 4th generation mobile communication.

UPF operates as a boundary point between next generation RAN (NG-RAN) and core network, and is an element that maintains data path between gNB and SMF. Also, when the UE moves across an area served by gNB, UPF performs the role of mobility anchor point. UPF may perform the function of handling PDU. For mobility within NG-RAN (e.g., NG-RAN defined after 3GPP Release-15), UPF may route packets. Also, UPF may function as an anchor point for mobility with other 3GPP networks (e.g., RAN defined before 3GPP Release-15), for example, UMTS (universal mobile telecommunications system) terrestrial radio access network (UTRAN), evolved-UTRAN (E-UTRAN), or GSM (global system for mobile communication)/EDGE (enhanced data rates for global evolution) radio access network (GERAN). UPF may correspond to a termination point of data interface toward data network.

PCF is a node that controls operator policy. AF is a server for providing various services to the UE. UDM is a server that manages subscriber information, like home subscriber server (HSS) of 4th generation mobile communication. UDM 460 stores and manages subscriber information in unified data repository (UDR).

SMF may perform the function of allocating Internet protocol (IP) address of the UE. And SMF may control protocol data unit (PDU) session.

For convenience of description below, reference numerals for AMF, SMF, PCF, UPF, AF, UDM, N3IWF, gNB, or UE may be omitted, and may operate with reference to matters described in standard documents published before this document.

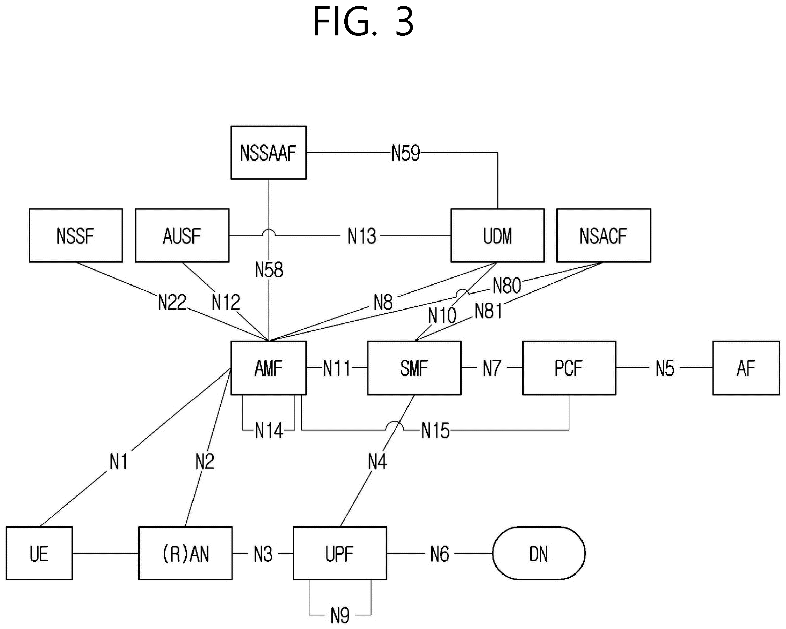

FIG. 3 illustrates an example of functional separation between NG-RAN and 5th generation core (5GC) applicable to the present disclosure.

Referring to FIG. 3, the UE is connected to a data network (DN) through next generation RAN. The control plane function (CPF) node performs all or part of the functions of mobility management entity (MME) of 4th generation mobile communication, and all or part of the control plane functions of serving gateway (S-GW) and PDN gateway (P-GW). The CPF node includes AMF and SMF.

The UPF node performs the function of a gateway through which user data is transmitted and received.

Authentication server function (AUSF) authenticates and manages the UE. Network Slice Selection Function (NSSF) is a node for network slicing as described below.

Network exposure function (NEF) provides a mechanism to securely expose services and functions of 5G core.

The reference points shown in FIG. 3 are as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in non-roaming scenario, and a reference point between AMF and PCF of visited network in roaming scenario. N16 represents a reference point between SMFs. N22 represents a reference point between AMF and NSSF. N30 represents a reference point between PCF and NEF. N33 may represent a reference point between AF and NEF, and the above-mentioned entities and interfaces may be configured with reference to matters described in standard documents published before this document. N58 represents a reference point between AMF and NSSAAF. N59 represents a reference point between UDM and NSSAAF. N80 represents a reference point between AMF and NSACF. N81 represents a reference point between SMF and NSACF.

The wireless interface protocol is based on 3GPP radio access network specifications. The wireless interface protocol consists horizontally of physical layer, data link layer, and network layer, and is vertically divided into user plane for data information transmission and control plane for control signal (signaling) transmission.

Protocol layers can be divided into L1 (layer-1), L2 (layer-2), and L3 (layer-3) based on the lower three layers of the open system interconnection (OSI) reference model widely known in communication systems.

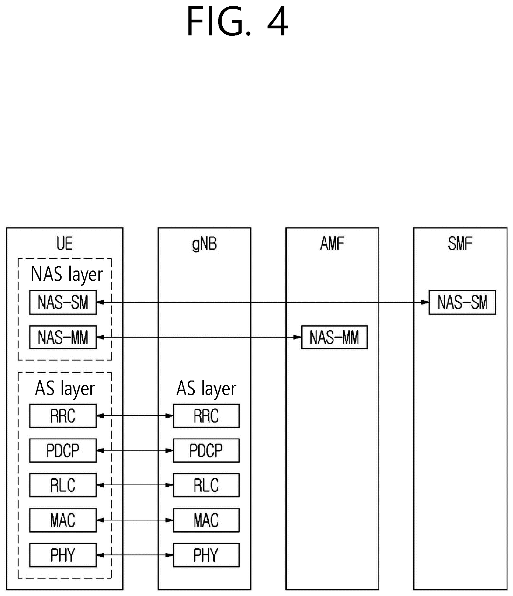

Hereinafter, the present disclosure describes each layer of wireless protocol. FIG. 4 illustrates an example of general architecture of a 5th generation (5G) system applicable to the present disclosure.

Referring to FIG. 4, the access stratum (AS) layer may include physical (PHY) layer, medium access control layer, radio link control (RLC) layer, packet data convergence protocol (PDCP) layer, and radio resource control (RRC) layer, and operations based on each layer may operate with reference to matters described in standard documents published before this document.

### Specific embodiments of the present disclosure

The present disclosure relates to an apparatus and method for supporting a conditional handover (CHO) request in a wireless communication system. More specifically, the present disclosure relates to an apparatus and method for supporting multiple CHO requests using a single conditional primary secondary cell (PSCell) addition (CPA) procedure in a wireless communication system.

In the present disclosure, conditional handover (CHO) includes a handover that is executed only when an execution condition is met, and a conditional primary secondary cell addition (CPA) procedure includes a PSCell addition procedure that is executed only when a PSCell addition execution condition is met.

A master cell group (MCG) is a serving cell group associated with a master node (MN) in multi-radio dual connectivity (MR-DC), and includes a primary cell (PCell) and may optionally include one or more secondary cells (SCells). A master node is a radio access node that provides a control plane connection to a core network in MR-DC, and may include at least one of a master eNB in E-UTRA-NR dual connectivity (EN-DC), a master ng-eNB in NG-RAN E-UTRA-NR dual connectivity (NGEN-DC), or a master gNB in NR-NR dual connectivity (NR-DC) and NR-E-UTRA dual connectivity (NE-DC). A PCell is a primary cell of a master cell group.

A secondary cell group (SCG) is a serving cell group associated with a secondary node (SN) in MR-DC, and includes a PSCell and may optionally include one or more SCells. A secondary node is a radio access node with no control plane connection to a core network in MR-DC, and may provide additional resources to a UE. A secondary node may include at least one of a secondary en-gNB in EN-DC, a secondary ng-eNB in NE-DC, or a secondary gNB in NR-DC and NGEN-DC. A PSCell is a primary cell of a secondary cell group.

According to the Rel-18 network mobility enhancement work item (WI), the following has been documented to extend conditional handover (CHO) using the NR-DC architecture defined in Rel-17.

### 3. Justification

When the UE moves from the coverage area of one cell to another cell, a serving cell change needs to be performed. Currently serving cell change is triggered by L3 measurements and is done by RRC signalling triggered Reconfiguration with Synchronisation for change of PCell and PSCell, as well as release add for SCells when applicable. All cases involve complete L2 (and L1) resets, leading to longer latency, larger overhead and longer interruption time than beam switch mobility. The goal of L1/L2 mobility enhancements is to enable a serving cell change via L1/L2 signalling, in order to reduce the latency, overhead and interruption time.

In Rel-17 Conditional PSCell change (CPC)/Conditional PSCell addition (CPA), a CPC/CPA-configured UE has to release the CPC/CPA configurations when completing random access towards the target PSCell. Hence the UE doesn't have a chance to perform subsequent CPC/CPA without prior CPC/CPA reconfiguration and re-initialization from the network. This will increase the delay for the cell change and increase the signaling overhead, especially in the case of frequent SCG changes when operating FR2. Therefore, MR-DC with selective activation of cell groups aims at enabling subsequent CPC/CPA after SCG change, without reconfiguration and re-initialization on the CPC/CPA preparation from the network. This results in a reduction of the signalling overhead and interrupting time for SCG change.

Currently, CHO and MR-DC cannot be configured simultaneously. This limits the usefulness of these two features when MR-DC is configured. If it is not completed in Rel-17, Rel-18 should specify mechanisms for CHO and MR-DC to be configured simultaneously. However, this alone may not be sufficient to optimise MR-DC mobility, as the radio link quality of the conditionally-configured PSCell may not be good enough or may not be the best candidate PSCell when the UE accesses the target PCell, and this may impact the UE throughput. To mitigate this throughput impact, Rel-18 CHO+MRDC can consider CHO including target MCG and multiple candidate SCGs for CPC/CPA.

### 4. Objective

### 4.1 Objective of SI or Core part WI or Testing part WI

The detailed objective of this work item are:
1. To specify mechanism and procedures of L1/L2 based inter-cell mobility for mobility latency reduction:
   - Configuration and maintenance for multiple candidate cells to allow fast application of configurations for candidate cells [RAN2, RAN3]
      ∘ Dynamic switch mechanism among candidate serving cells (including SpCell and SCell) for the potential applicable scenarios based on L1/L2 signalling [RAN2, RAN1]
      ∘ L1 enhancements for inter-cell beam management, including L1 measurement and reporting, and beam indication [RAN1, RAN2]
   - Note 1: Early RAN2 involvement is necessary, including the possibility of further clarifying the interaction between this bullet with the previous bullet
   - Note 2: Only SSB-based L1 measurement is supported in this release.
      ∘ Timing Advance management [RAN1, RAN2]
      ∘ CU-DU interface signaling to support L1/L2 mobility, if needed [RAN3]

   Note 3: FR2 specific enhancements are not precluded, if any.
   Note 4: The procedure of L1/L2 based inter-cell mobility are applicable to the following scenarios:
      - Standalone, CA and NR-DC case with serving cell change within one CG, prioritizing MCG
      - Intra-DU case and intra-CU inter-DU case (applicable for Standalone and CA: no new RAN interfaces are expected)
      - Both intra-frequency and inter-frequency
      - Both FR1 and FR2
      - Source and target cells may be synchronized or non-synchronized
2. To specify mechanism and procedures of NR-DC with selective activation of the cell groups (at least for SCG) via L3 enhancements:
   ∘ to allow subsequent cell group change after changing CG without reconfiguration and re-initiation of CPC/CPA [RAN2, RAN3, RAN4]
   Note 5: A harmonized RRC modelling approach for objectives 1 and 2 could be considered to minimize the workload in RAN2.
3. For CHO including target MCG and target SCG in NR-DC [RAN3]:
   o to specify data forwarding optimizations; and
   o to specify, if needed, a solution to avoid unnecessary signaling exchange between source MN and target SN.
4. To specify CHO including target MCG and candidate SCGs for CPC/CPA in NR-DC [RAN3, RAN2]
   ∘ CHO including target MCG and target SCG is used as the baseline
5. To specify RRM core requirements for the following, as necessary [RAN4]:
   ∘ L1/L2-based inter-cell mobility
   ∘ Enhanced CHO configurations addressed by this WI
6. To specify RF requirements to cover inter-frequency L1/L2-based mobility, as necessary [RAN4].
7. To study and specify how to reuse the IDLE/INACTIVE mode measurement results which are to be reported during and/or after RRC connection setup/resume in order to improve SCell/SCG setup delay [RAN4, RAN2], including:
   ∘ Availability and validation of the IDLE/INACTIVE mode measurement results to be reported [RAN4]; and
   ∘ Definition of corresponding RRM requirements [RAN4]; and
   ∘ If necessary based on RAN4 outcome, definition of corresponding signalling support [RAN2].

   Note 6: RAN4 will coordinate in due course with RAN2 to start the work.
   Note 7: R4-2220415 serves as baseline for future work in RAN4
   Note 8: With exception of the above scenarios, enhancements on IDLE/INACTIVE mode measurements and on UE behavior in IDLE/INACTIVE mode are not in scope.

That is, in Rel-17 conditional handover with NR-DC, each candidate PCell configuration (e.g., MCG configuration) may be associated with one SCG configuration. Accordingly, once conditional handover for a specific target PCell is executed, the SCG configuration associated with the corresponding target PCell configuration may be used for NR-DC operation together with the selected target PCell. This is documented in Section 10.19 of TS 37.340, which defines inter-MN conditional handover (inter-MN CHO).

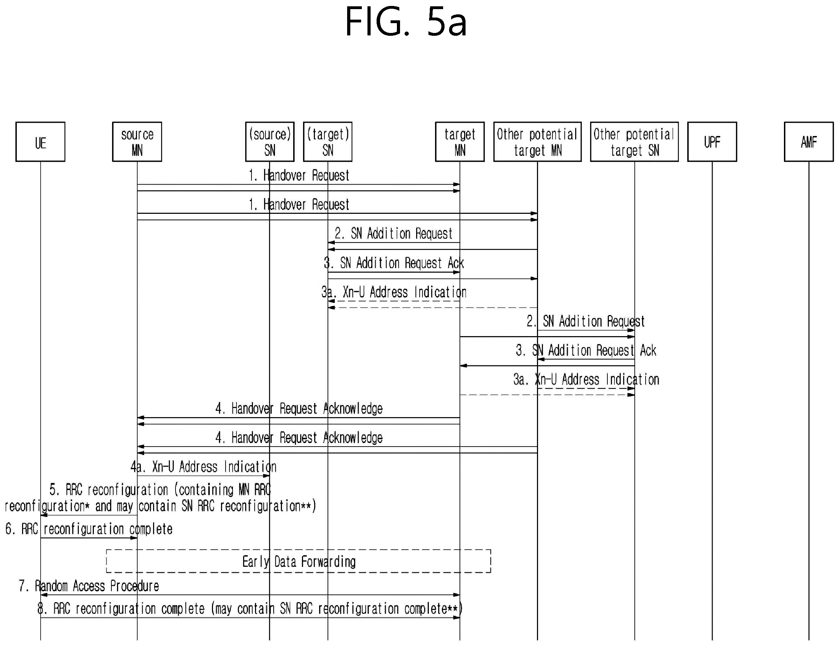

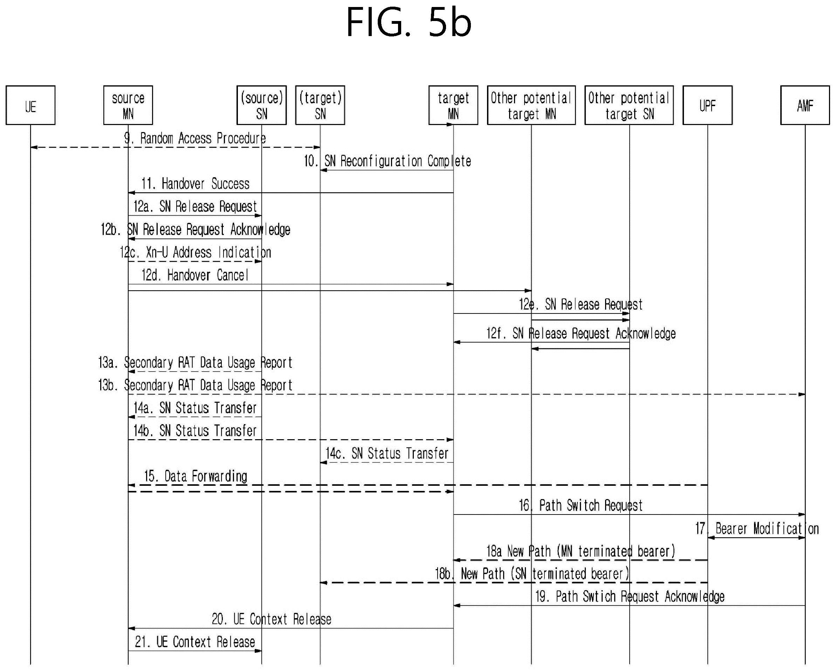

FIG. 5a and FIG. 5b illustrate a conditional handover procedure with a secondary node. FIG. 5 corresponds to Figure 10.19.2- of TS 37.340 Section 10.19.2. As illustrated in FIG. 5a and FIG. 5b, during a conditional handover procedure using NR-DC, a different SN may be selected or the same SN may be kept based on how the corresponding SCG configuration for each candidate target PCell has been prepared.

In Rel-18, work is ongoing to extend the architecture to allow a UE to select a PSCell in a conditional manner among multiple pre-configured PSCells, similar to conditional handover. The selected PSCell may be referred to as candidate SCGs. The goal of this work is to leverage the existing Rel-17 CPA mechanism and combine the CPA mechanism with CHO.

Although one or more candidate PSCell configurations may be prepared for each PCell requested for conditional handover, Rel-17 conditional handover with NR-DC allows at most one SCG configuration to be associated with each PCell requested for conditional handover. In Rel-17, a target MN was allowed to trigger a separate SN addition procedure toward the same SN. For example, for each of the parallel conditional handover requests with different received PCells, a target MN was allowed to trigger a separate SN addition procedure toward the same SN. In addition, depending on the target MN implementation, it was allowed to trigger only one SN addition procedure toward an SN and use the same CG-Config for all parallel conditional handover requests. Alternatively, a combination of the two approaches described above was also possible.

The former approach makes sense, for example, when the PDU sessions or DRBs requested to be established from the source are different for different PCells of parallel conditional handover requests from the source.

The latter approach, on the other hand, also makes sense when the PDU sessions or DRBs requested to be established from the source are identical for different PCells of parallel conditional handover requests from the source. In this case, a single SN addition procedure is sufficient to prepare only one SCG configuration toward the same SN and combine it with multiple conditional handover requests. This approach may equally apply to Rel-18 conditional handover with candidate SCGs. That is, the same approach may equally apply to a conditional handover procedure using CPA instead of the legacy SN addition procedure.

The latter approach is more suitable for an intra-MN conditional handover (intra-MN CHO) scenario where conditional handover is prepared within the same master node. For example, it is more suitable for a scenario where the source MN and the target MN in FIG. 5a and FIG. 5b are merged into one MN. In this case, parallel SN addition procedures toward the same SN for different candidate target PCells are more likely to be unnecessary.

Although both approaches were allowed in Rel-17, the second approach of using a single CPA procedure instead of parallel CPA toward a candidate target SN cannot accommodate multiple conditional handover requests. In addition, it is unclear how this approach would work in Rel-18 with candidate SCGs.

Therefore, the present disclosure proposes mechanisms to support multiple CHO requests in a target MN using a single conditional PSCell addition (CPA) procedure toward each candidate target SN when preparing Rel-18 handover with candidate SCGs configuration for a UE.

An embodiment of the present disclosure proposes a procedure for supporting multiple conditional handover requests in a target MN using a single CPA procedure toward each candidate target SN. The embodiment of the present disclosure may be applied when preparing Rel-18 conditional handover with candidate SCGs configuration for a UE.

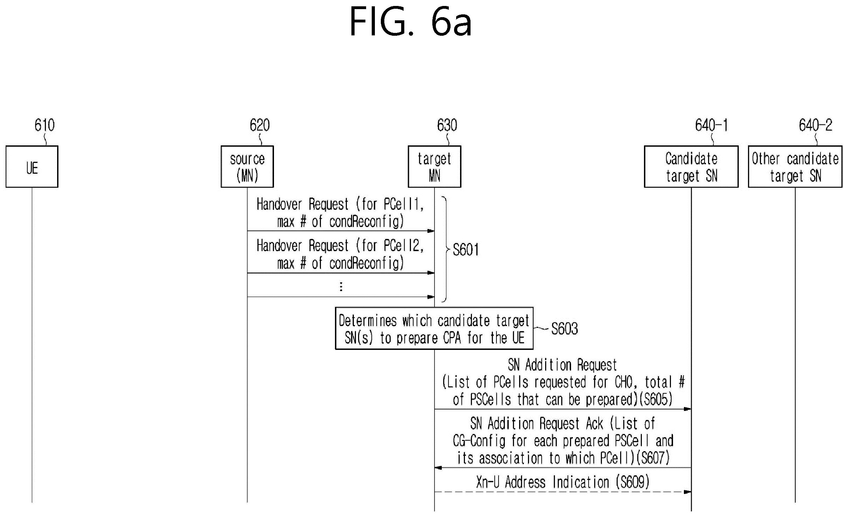

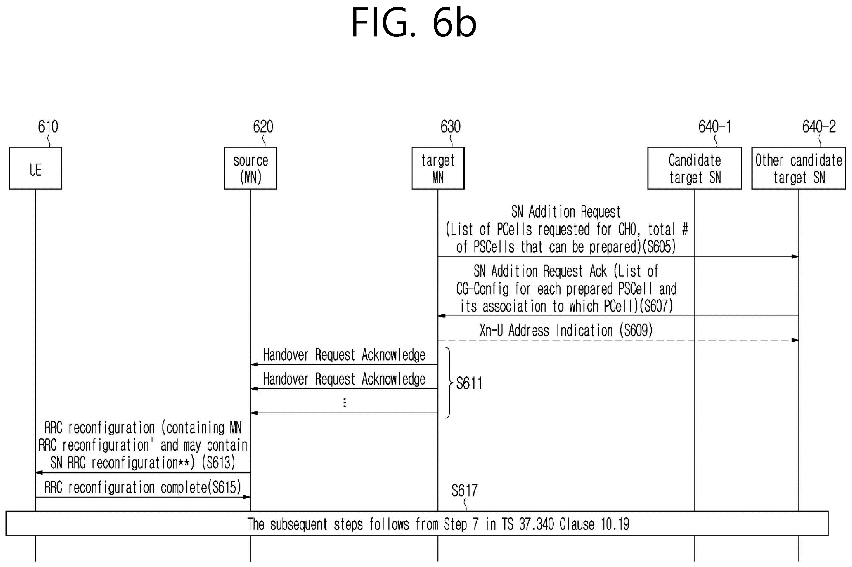

FIG. 6a and FIG. 6b illustrate an example of a procedure for supporting multiple conditional handover requests according to an embodiment of the present disclosure. Specifically, FIG. 6a and FIG. 6b illustrate an example of a procedure for supporting multiple conditional handover requests using a single CPA procedure in Rel-18 conditional handover with candidate SCGs.

Referring to FIG. 6a and FIG. 6b, in step S601, a source MN 620 transmits a plurality of handover request messages to a target MN 630. Specifically, the source MN 620 determines conditional handover for a UE based on measurement results obtained from a UE 610. The source MN 620 determines candidate target PCells suitable for conditional handover of the UE, and initiates a handover preparation procedure by transmitting handover request messages for each of the candidate target PCells to a target MN 630 serving the candidate target PCells. Depending on the selected candidate target PCells, the handover preparation procedure may be triggered in parallel toward each target MN, or may be triggered toward one or more target MNs. Each handover request message may include, for each candidate target PCell, a maximum number of conditional reconfigurations (condReconfig) allowed to be prepared by the requested target MN.

In step S603, the target MN 630 determines at least one candidate target SN to prepare CPA for the UE. When a conditional handover request message for a plurality of PCells currently being served is received from the source MN 620, the target MN 630 may determine the plurality of PCells as candidate target PCells for conditional handover of the UE. The target MN 630 may perform admission control for the candidate target PCells for which conditional handover has been requested, and may determine at least one candidate target SN that needs to prepare CPA for the candidate target PCells.

In step S605, the target MN 630 transmits an SN addition request message to at least one candidate target SN 640-1, 640-2. Once at least one candidate target SN 640-1, 640-2 is determined, the target MN 630 may initiate a CPA procedure toward each of the determined at least one candidate target SN 640-1, 640-2 by transmitting an SN addition request message to each of the determined at least one candidate target SN 640-1, 640-2. The SN addition request message may be a request message for conditional PSCell addition, and may be referred to as a CPA request message. The CPA request message may include a list of candidate target PCells determined for the candidate target SN among candidate target PCells requested from the source MN for conditional handover. The candidate target PCells requested from the source MN may include PCells corresponding to handover request messages received from the source MN. The CPA request message may further include a total number of PSCell configurations allowed to be prepared by each candidate target SN for the list of candidate target PCells. The total number of allowed PSCell configurations may be determined based on the maximum number of conditional reconfigurations indicated by the source MN for each candidate target PCell in step S601. Alternatively, the CPA request message may include the number of PSCell configurations allowed per each PCell to be prepared by each candidate target SN. The number of PSCell configurations allowed per each PCell may be determined based on the maximum number of allowed conditional reconfigurations indicated by the source MN for each candidate target PCell for which conditional handover has been requested in step S601.

In step S607, at least one candidate target SN 640-1, 640-2 transmits an SN addition request acknowledge message to the target MN 630. The at least one candidate target SN 640-1, 640-2 that has received the CPA request message performs admission control for candidate PSCells and prepares candidate PSCell configurations. At this time, the number of candidate PSCell configurations to be prepared does not exceed the number allowed by the CPA request message. For example, the number of candidate PSCell configurations to be prepared for the list of candidate target PCells in each of the at least one candidate target SN 640-1, 640-2 may be limited so as not to exceed the total number of allowed candidate PSCell configurations. According to one embodiment, the number of candidate PSCell configurations to be prepared may be limited on a per-PCell basis. For example, when a per-PCell limit is requested by the target MN 630, the number of candidate PSCell configurations to be prepared for each candidate target PCell in each of the at least one candidate target SN 640-1, 640-2 may be limited so as not to exceed the maximum number of allowed candidate PSCell configurations per each candidate target PCell. The at least one candidate target SN 640-1, 640-2 provides the target MN 630 with a list of CG-Config including information related to each prepared candidate PSCell configuration. That is, the at least one candidate target SN 640-1, 640-2 transmits to the target MN 630 an SN addition request acknowledge message including the list of CG-Config. The SN addition request acknowledge message may be a response message to the CPA request message. The SN addition request acknowledge message may further include information on how each CG-Config prepared for each selected candidate PSCell is associated with which candidate target PCell among the candidate target PCells in the list of candidate target PCells indicated by the CPA request message.

In step S609, the target MN 630 transmits an Xn-U address indication message to the at least one candidate target SN 640-1, 640-2. When SN terminated bearers using MCG resources have been prepared, the target MN 630 may provide Xn-U downlink (DL) transport network layer (TNL) information using a subsequent Xn-U address indication message. That is, the subsequent Xn-U address indication message may include Xn-U DL TNL information.

In step S611, the target MN 630 transmits a handover request acknowledge message to the source MN 620. Based on the candidate PSCell configurations prepared by the at least one candidate target SN 640-1, 640-2 and the association between each candidate PSCell configuration and a specific candidate target PCell among the candidate target PCells requested for conditional handover from the source MN 620, the target MN 630 transmits to the source MN 620 a message acknowledging the handover request for each candidate target PCell. At this time, the message acknowledging the handover request may be a response message to the handover request message, and may include a handover request acknowledge message. Each handover request acknowledge message may include information to be transmitted to the UE 610 for performing Rel-18 conditional handover with candidate SCGs. For example, each handover request acknowledge message may include information related to an MCG configuration for the corresponding candidate target PCell and information related to at least one SCG configuration for at least one associated prepared candidate PSCell.

In step S613, the source MN 620 transmits an RRC reconfiguration message to the UE 610. The RRC reconfiguration message may include an MN RRC reconfiguration* message and an SN RRC reconfiguration** message. The source MN 620 may generate an RRC reconfiguration message including a conditional reconfiguration. At this time, the RRC reconfiguration message may be generated based on information related to the MCG configuration and/or SCG configuration delivered through the handover request acknowledge message received in step S611. For example, the handover request acknowledge message received in step S611 may include a list of RRC reconfiguration* messages and associated execution conditions, and each RRC reconfiguration* message may include information related to an MCG configuration. Each RRC reconfiguration** message received from at least one candidate target SN in step S611 may include information related to an SCG configuration. In step S615, the UE 610 transmits an RRC reconfiguration complete message to the source MN 620. The UE 610 may store the conditional handover with information related to the configuration of candidate SCGs received in step S613, and may respond to the source MN 620 using the RRC reconfiguration complete message.

In step S617, step 7 and/or subsequent steps defined in Clause 10.19 of TS 37.340 may be performed. For example, step 7 (e.g., random access procedure) and subsequent steps of Figure 10.19.2-1 in Clause 10.19 of TS 37.340 may be performed.

As described above, the present disclosure proposes a method and apparatus for supporting conditional handover with conditional PSCell configurations in a network system.

A target master node (MN) may receive, from a source NG-RAN node serving a UE, at least one conditional handover request message for at least one candidate target PCell in the target MN of the UE. In this case, the target MN may decide to add at least one candidate PSCell configuration for the UE using at least one neighboring candidate target SN, and may initiate a conditional PSCell addition procedure toward the candidate target SN.

The conditional PSCell addition procedure toward the candidate target SN may be initiated by transmitting a CPA request message to the candidate target SN. The CPA request message may include an SN addition request message. The SN addition request message may include at least one of a list of candidate target PCells determined for the candidate target SN among candidate target PCells requested from the source NG-RAN node for conditional handover, or information related to an allowed number of candidate PSCell configurations. The information related to the allowed number of candidate PSCell configurations may include at least one of a total number of PSCell configurations allowed to be prepared by the candidate target SN for the list of candidate target PCells, or a maximum number of PSCell configurations allowed per each PCell to be prepared by the candidate target SN.

The candidate target SN may receive a CPA request message for initiating a CPA procedure from the target MN. In this case, the candidate target SN may perform admission control for at least one candidate PSCell and prepare at least one candidate PSCell configuration. Here, the number of at least one candidate PSCell configuration to be prepared by the candidate target SN does not exceed the total number of PSCell configurations allowed by the target MN. Here, the total number of PSCell configurations allowed by the MN may be the total number of allowed PSCell configurations included in the CPA request message. If the CPA request message includes the maximum number of PSCell configurations allowed per each PCell, the number of candidate PSCell configurations per each candidate target PCell to be prepared by the candidate target SN may be limited so as not to exceed the maximum number of PSCell configurations allowed for each candidate target PCell.

The candidate target SN may transmit a response message to the CPA request to the target MN. The response message to the CPA request may include an SN addition request acknowledge message. The SN addition request acknowledge message may include at least one of a list of all candidate PSCell configurations prepared by the candidate target SN for the UE, or information on how each prepared candidate PSCell configuration is associated with which candidate target PCell among the list of candidate target PCells provided from the target MN.

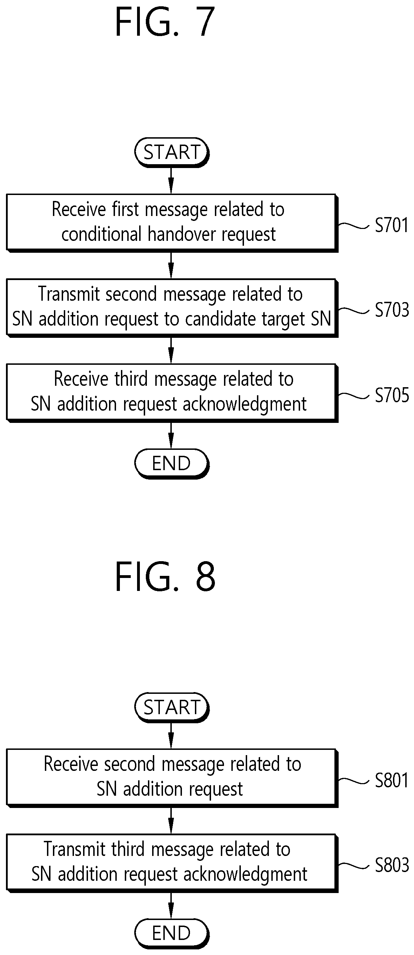

FIG. 7 illustrates an example of a procedure for receiving PSCell configuration information according to an embodiment of the present disclosure. FIG. 7 illustrates a method performed by a first node that is a target MN of a terminal.

Referring to FIG. 7, in step S701, a first node receives a first message related to a conditional handover request. The first node may receive, from a source MN of a terminal, a first message related to a conditional handover request of the terminal. The first message may include a conditional handover request message. The first message may be received for each candidate target PCell for conditional handover of the terminal. For example, when a plurality of candidate target PCells suitable for conditional handover of the terminal belong to the first node, the first node may receive conditional handover request messages for each of the plurality of candidate target PCells. Each conditional handover request message for each candidate target PCell may include information related to a maximum number of conditional reconfigurations that the first node is allowed to prepare for the corresponding candidate target PCell.

In step S703, the first node transmits a second message related to an SN addition request to a candidate target SN. The first node may determine at least one candidate target SN for the terminal, including a first SN, and may transmit a second message related to an SN addition request to each of the at least one candidate target SN. The second message may be a CPA request message and may include an SN addition request message. The second message may include at least one of a list of candidate target PCells determined for the corresponding candidate target SN among candidate target PCells requested from the source MN for conditional handover, or information related to an allowed number of candidate PSCell configurations. The candidate target PCells requested from the source MN may include PCells corresponding to the first message. The information related to the allowed number of candidate PSCell configurations may include at least one of a total number of allowed candidate PSCell configurations for the list of corresponding candidate target PCells, or a maximum number of allowed PSCell configurations per each PCell. The information related to the allowed number of candidate PSCell configurations may be determined based on the maximum number of allowed conditional reconfigurations included in the first message.

In step S705, the first node receives a third message related to an SN addition request acknowledgment. The first node may receive the third message from the candidate target SN as a response message to the second message. The third message may be a response message to the CPA request and may include an SN addition request acknowledge message. The third message may include information related to a candidate PSCell configuration prepared by the candidate target SN based on the second message. Specifically, the third message may include information related to a prepared candidate PSCell configuration corresponding to each of the candidate target PCells determined for the corresponding candidate target SN. The number of prepared candidate PSCell configurations may be limited so as not to exceed the allowed number of candidate PSCell configurations. The third message may further include information indicating an association between each prepared candidate PSCell configuration and a candidate target PCell. For example, the third message may further include information indicating how each prepared candidate PSCell configuration is associated with which candidate target PCell in the list of candidate target PCells provided to the corresponding candidate target SN by the first node.

According to one embodiment, the first node may include the target MN in the embodiment described with reference to FIG. 6a and FIG. 6b. The first node may further perform at least one operation of the target MN as described with reference to FIG. 6a and FIG. 6b.

FIG. 8 illustrates an example of a procedure for transmitting PSCell configuration information according to an embodiment of the present disclosure. FIG. 8 illustrates a method performed by a second node that is a candidate target SN of a terminal.

Referring to FIG. 8, in step S801, a second node receives a second message related to an SN addition request. The second message is a CPA request message and may include an SN addition request message. The second message may be received from a first node that is the target MN. The second message may include at least one of a list of candidate target PCells determined for the second node that is the candidate target SN, or information related to an allowed number of candidate PSCell configurations. The information related to the allowed number of candidate PSCell configurations may include at least one of a total number of allowed candidate PSCell configurations for the list of corresponding candidate target PCells, or a maximum number of allowed PSCell configurations per each PCell.

In step S803, the second node transmits a third message related to an SN addition request acknowledgment. The second node may transmit the third message to the first node that is the target MN as a response message to the second message. The third message is a response message to the CPA request and may include an SN addition request acknowledge message. The third message may include information related to a prepared candidate PSCell configuration corresponding to each of the candidate target PCells determined for the second node that is the corresponding candidate target SN. The number of prepared candidate PSCell configurations may be limited so as not to exceed the allowed number of candidate PSCell configurations. The third message may further include information on how each prepared candidate PSCell configuration is associated with which candidate target PCell among the list of candidate target PCells provided from the first node.

According to one embodiment, the second node may include the candidate target SN in the embodiment described with reference to Figs. 6a and 6b. The second node may further perform at least one operation of the candidate target SN as described with reference to Figs. 6a and 6b.

Examples of the proposed methods described above can also be included as one of the implementation methods of the present disclosure, so it is clear that they can be considered as types of proposed methods. In addition, the proposed methods described above may be implemented independently, but may also be implemented in the form of a combination (or merger) of some proposed methods. Rules may be defined so that information on whether the proposed methods are applied (or information on the rules of the proposed methods) is notified by the base station to the terminal through a predefined signal (e.g., physical layer signal or higher layer signal).

The present disclosure may be embodied in other specific forms without departing from the technical ideas and essential features described in the present disclosure. Therefore, the above detailed description should not be interpreted as restrictive in all aspects but should be considered as illustrative. The scope of the present disclosure should be determined by reasonable interpretation of the appended claims, and all changes within the equivalent scope of the present disclosure are included in the scope of the present disclosure. In addition, claims that do not have explicit citation relationships in the claims may be combined to form embodiments or may be included as new claims by amendments after filing.

### INDUSTRIAL APPLICABILITY

The embodiments of the present disclosure can be applied to various wireless access systems. Examples of various wireless access systems include 3rd Generation Partnership Project (3GPP) or 3GPP2 systems.

The embodiments of the present disclosure can be applied not only to the various wireless access systems described above, but also to all technical fields that apply the various wireless access systems. Furthermore, the proposed method can also be applied to mmWave and THz communication systems that use ultra-high frequency bands.

Additionally, the embodiments of the present disclosure can also be applied to various applications such as autonomous vehicles and drones.

## Claims

1. A method comprising:
receiving, from a source master node (MN) of a terminal, at least one first message related to a conditional handover request of the terminal;
transmitting, to a first secondary node (SN) among candidate target secondary nodes for the terminal, a second message related to an SN addition request; and
receiving, from the first SN, a third message related to the SN addition request,
wherein the second message comprises at least one of a list of candidate target primary cells (PCells) determined for the first SN among candidate target PCells requested by the source MN for conditional handover, or information related to an allowed number of candidate primary secondary cell (PSCell) configurations, and
wherein the third message comprises information related to a candidate PSCell configuration prepared by the first SN based on the second message.

2. The method of claim 1, wherein the information related to the allowed number of candidate PSCell configurations comprises at least one of a total number of PSCell configurations allowed to be prepared by the first SN for the determined list of candidate target PCells, or a maximum number of PSCell configurations allowed per each PCell to be prepared by the first SN.

3. The method of claim 1, wherein at least one of the total number of allowed PSCell configurations or the maximum number of PSCell configurations allowed per each PCell is determined based on a maximum number of allowed conditional reconfigurations included in the first message.

4. The method of claim 1, wherein the third message comprises at least one of candidate PSCell configurations prepared by the first SN, or information indicating an association between the prepared candidate PSCell configurations and candidate target PCells determined for the first SN.

5. The method of claim 4, wherein a number of the prepared candidate PSCell configurations is limited by the allowed number of candidate PSCell configurations.

6. The method of claim 5, wherein the number of the prepared candidate PSCell configurations is limited by a total number of PSCell configurations allowed for the determined list of candidate target PCells.

7. The method of claim 5, wherein the number of the prepared candidate PSCell configurations is limited by a maximum number of PSCell configurations allowed per each candidate target PCell.

8. The method of claim 4, further comprising:
transmitting at least one fourth message to the source MN based on the association between the prepared candidate PSCell configurations and the candidate target PCells determined for the first SN.

9. The method of claim 1, wherein the second message comprises a message requesting a conditional PSCell addition.

10. The method of claim 1, wherein receiving the at least one first message comprises receiving a plurality of first messages corresponding to each of a plurality of candidate target PCells from the source MN, and
wherein the candidate target PCells requested by the source MN comprise the plurality of candidate target PCells.

11. A method comprising:
receiving, from a target master node (MN) of a terminal, a second message related to a secondary node (SN) addition request; and
transmitting, to the target MN, a third message related to the SN addition request,
wherein the second message comprises at least one of a list of candidate target primary cells (PCells) determined for a first SN among candidate target PCells requested by a source MN for conditional handover, or information related to an allowed number of candidate primary secondary cell (PSCell) configurations, and
wherein the third message comprises information related to a candidate PSCell configuration prepared by the first SN based on the second message.

12. An apparatus comprising:
a transceiver; and
a processor coupled to the transceiver,
wherein the processor controls the transceiver to:
receive, from a source master node (MN) of a terminal, at least one first message related to a conditional handover request of the terminal;
transmit, to a first SN among candidate target secondary nodes (SNs) for the terminal, a second message related to an SN addition request; and
receive, from the first SN, a third message related to the SN addition request,
wherein the second message comprises at least one of a list of candidate target primary cells (PCells) determined for the first SN among candidate target PCells requested by the source MN for conditional handover, or information related to an allowed number of candidate primary secondary cell (PSCell) configurations, and
wherein the third message comprises information related to a candidate PSCell configuration prepared by the first SN based on the second message.

13. An apparatus comprising:
a transceiver; and
a processor coupled to the transceiver,
wherein the processor controls the transceiver to:
receive, from a target master node (MN) of a terminal, a second message related to a secondary node (SN) addition request; and
transmit, to the target MN, a third message related to the SN addition request,
wherein the second message comprises at least one of a list of candidate target primary cells (PCells) determined for a first SN among candidate target PCells requested by a source MN for conditional handover, or information related to an allowed number of candidate primary secondary cell (PSCell) configurations, and
wherein the third message comprises information related to a candidate PSCell configuration prepared by the first SN based on the second message.

14. A communication apparatus comprising:
at least one processor; and
at least one memory coupled to the at least one processor and storing instructions that, when executed by the at least one processor, direct operations,
wherein the operations comprise:
receiving, from a source master node (MN) of a terminal, at least one first message related to a conditional handover request of the terminal;
transmitting, to a first SN among candidate target secondary nodes (SNs) for the terminal, a second message related to an SN addition request; and
receiving, from the first SN, a third message related to the SN addition request,
wherein the second message comprises at least one of a list of candidate target primary cells (PCells) determined for the first SN among candidate target PCells requested by the source MN for conditional handover, or information related to an allowed number of candidate primary secondary cell (PSCell) configurations, and
wherein the third message comprises information related to a candidate PSCell configuration prepared by the first SN based on the second message.

15. A non-transitory computer-readable medium storing at least one instruction,
wherein the at least one instruction, when executed by at least one processor, causes a communication apparatus to perform operations,
wherein the operations comprise:
receiving, from a source master node (MN) of a terminal, at least one first message related to a conditional handover request of the terminal;
transmitting, to a first SN among candidate target secondary nodes (SNs) for the terminal, a second message related to an SN addition request; and
receiving, from the first SN, a third message related to the SN addition request,
wherein the second message comprises at least one of a list of candidate target primary cells (PCells) determined for the first SN among candidate target PCells requested by the source MN for conditional handover, or information related to an allowed number of candidate primary secondary cell (PSCell) configurations, and
wherein the third message comprises information related to a candidate PSCell configuration prepared by the first SN based on the second message.
